# NEUE EUROPÄISCHE PATENTSCHRIFT

(11) **EP 0 968 059 B2**
(45) Veröffentlichungstag und Bekanntmachung des Hinweises auf die Entscheidung über den Einspruch: **10.06.2009**
(45) Hinweis auf die Patenterteilung: 29.09.2004
(21) Anmeldenummer: 98913682.5
(22) Anmeldetag: 06.03.1998
(51) Int. Cl.: B05D 3/06, B05D 7/16, C09D 5/00, C09D 201/02

(54) **VERFAHREN ZUR MEHRSCHICHTLACKIERUNG UND ÜBERZUGSMITTEL FÜR DAS VERFAHREN**
METHOD FOR MULTI-LAYER ENAMELING AND COATING COMPOUNDS FOR SAID METHOD
PROCEDE DE MISE EN PEINTURE MULTICOUCHE ET AGENT DE REVETEMENT POUR CE PROCEDE

(30) Priorität: 07.03.1997 DE 19709560
(43) Veröffentlichungstag der Anmeldung: 05.01.2000
(73) Patentinhaber: E.I. DU PONT DE NEMOURS AND COMPANY, Wilmington, DE 19898 (US)
(72) Erfinder: MAAG, Karin, D-42277 Wuppertal (DE); DÖSSEL, Karl-Friedrich, D-42107 Wuppertal (DE)
(74) Vertreter: Gille Hrabal Struck Neidlein Prop Roos
(86) Internationale Anmeldenummer: PCT/EP1998/001334
(87) Internationale Veröffentlichungsnummer: WO 1998/040170

(56) Entgegenhaltungen:
- EP-A- 0 000 407
- EP-A- 0 247 563
- EP-A- 0 540 884
- EP-A- 0 568 967
- AT-B- 356 781
- DE-A- 3 332 004
- US-A- 4 675 234
- PATENT ABSTRACTS OF JAPAN vol. 011, no. 326 (C-454), 23. Oktober 1987 (1987-10-23) & JP 62 110779 A (TOYOTA MOTOR CORP), 21. Mai 1987 (1987-05-21)
- KLAUS CHOR: 'Lehrbuch für Fahrzeuglackierer', 1989, VERLAG NEUER MERKUR, MÜNCHEN Seiten 212 - 213

## Beschreibung

Die Erfindung betrifft ein Verfahren zur Lackierung von Substraten mit einer farbund/oder effektgebenden Basislack- und einer Klarlackdeckschicht sowie in diesem Verfahren verwendbare Klarlacküberzugsmittel.

Heutige Automobilserienlackierungen bestehen meist aus einer Basislack/Klarlack-Decklackierung, die auf eine elektrophoretisch grundierte und mit Füller beschichtete Karosse aufgebracht wird. Dabei werden der farb- und/oder effektgebende Basislack und der Klarlack bevorzugt naß-in-naß appliziert, d.h. Basislack und anschliessend applizierter Klarlack werden gemeinsam eingebrannt.

Der optisch-ästhetische Eindruck solcher Basislack/Klarlack-Zweischichtlackierungen wird wesentlich durch die Qualität der Klarlackschicht beeinflußt. Im Idealfall ist die Struktur der Klarlackschicht an waagerechten und senkrechten Flächen eines dreidimensionalen Substrats, beispielsweise einer Automobilkarosse gleich, was zum Beispiel durch Bestimmung der lang- und kurzwelligen Anteile der Oberflächenstruktur der Klarlackoberfläche ermittelt werden kann. Der beschriebene Idealfall läßt sich in der Praxis jedoch nicht ohne weiteres erreichen. Beispielsweise kann es zur Ausbildung von Unterschieden in der Oberflächenstruktur oder im Verlauf der äußeren Klarlackschicht kommen, da die Klarlacke nach ihrer Applikation und insbesondere während der Aufheizphase beim Einbrennprozeß als Folge einer temperaturbedingten Viskositätserniedrigung zum Ablaufen oder Absacken an außerhalb der Waagerechten befindlichen Flächen neigen. Es existieren verschiedene Wege, den unerwünschten Ablauferscheinungen bei Klarlacken entgegenzuwirken. Beispielsweise werden den Einbrennklarlacken das Ablaufverhalten günstig beeinflußende Additive zugesetzt. Oftmals führt dies jedoch zu einer reduzierten Brillianz der Klarlackschicht, wenn man die Klarlackschicht mit einer aus einem entsprechenden, additivfreien Einbrennklarlack erstellten Klarlackschicht vergleicht.

Eine weitere Möglichkeit den unerwünschten Ablauferscheinungen bei Klarlacken entgegenzuwirken besteht darin, das Substrat nach der Applikation des Einbrennklarlacks während des Ablüftens und/oder des Einbrennens um eine Achse rotieren zu lassen, eine Verfahrensweise die beispielsweise aus der EP-B-0 261 644 bekannt ist.

Die längerfristige Erhaltung des optisch-ästhetischen Eindrucks von Basislack/Klarlack-Zweischichtiackierungen, insbesondere von Kraftfahrzeugen wird wesentlich von der Chemikalien- und Kratzfestigkeit der Klarlackschicht beeinflußt, die sich im Laufe eines längeren Gebrauchszeitraums insbesondere als mehr oder weniger ausgeprägte Widerstandsfähigkeit gegen sauren Regen und gegen Waschverkratzung offenbart.

In der EP-A-0 000 407 wird ein strahlenhärtbares Überzugsmittel beschrieben auf Basis eines mit Acrylsäure veresterten hydroxyfunktionellen Polyesterharzes, einer Vinylverbindung, eines Photoinitiators und eines Polyisocyanates. In einem ersten Härtungsschritt erfolgt die Strahlenhärtung mittels UV-Licht und in einem zweiten Härtungsschitt erhält der Überzug durch die Hydroxyl/Isocyanat-Vernetzung seine Endhärte. Der zweite Härtungsschritt kann bei erhöhter Temperatur erfolgen.

In der EP-A-0 247 563 wird ein strahlenhärtbares Überzugsmittel beschrieben auf Basis einer poly(meth)acryloyl-funktionellen Verbindung, eines Polyolmono(meth)acrylats, eines Polyisocyanates, eines Lichtstabilisators und eines Photoinitiators. Die Strahlenhärtung erfolgt mittels UV-Licht. Durch die Hydroxyfunktionen in einem Teil der strahlenhärtenden Bindemittel wird eine zusätzliche Härtungsmöglichkeit mit dem Polyisocyanat beispielsweise in abgeschatteten Bereichen erreicht.

Die EP-A-0 540 884 beschreibt ein Verfahren zur Herstellung einer Mehrschichtlackierung durch Auftrag eines Klarlacküberzugs auf eine getrocknete oder vernetzte farbgebende und/oder effektgebende Basislackschicht, wobei der Klarlacküberzug aus einem ausschließlich durch radikalische und/oder kationische Polymerisation härtbaren Überzugsmittel aufgetragen wird und die Härtung durch energiereiche Strahlung eingeleitet und/oder durchgeführt wird.

Aufgabe der Erfindung ist die Bereitstellung naß-in-naß durchführbaren Verfahrens zur Lackierung von Substraten mit einer farb- und/oder effektgebenden Basislack- und einer Klarlackdeckschicht mit hervorragendem optisch-ästhetischem Eindruck. Das zu findende Verfahren soll das Ablaufen des Klarlacks an senkrechten Flächen verhindern und es sollen Klarlackschichten gebildet werden, die eine reduzierte Anfälligkeit gegen Chemikalien und Verkratzungen, insbesondere gegen Säure und Waschverkratzungen aufweisen. Das Verfahren soll insbesondere mit einfach zusammengesetzten, bevorzugt aus üblichen, beispielsweise handelsüblichen Komponenten formulierbaren Klarlacküberzugsmitteln durchführbar sein, d.h. gegebenenfalls nicht im Handel erhältliche Bestandteile der Klarlacküberzugsmittel sollen einfach zu synthetisieren sein.

Es hat sich gezeigt, daß diese Aufgabe überraschenderweise gelöst werden kann durch ein Verfahren zur Lackierung von Substraten mit einer farb- und/oder effektgebenden Basislack- und einer Klarlackdeckschicht, bei dem auf einem Substrat eine farb- und/oder effektgebende Basislackschicht aus einem Basislacküberzugsmittel aufgebracht und diese im Naß-in-Naß-Verfahren mit dem Klarlacküberzug versehen wird, wobei die unausgehärtete Klarlackschicht vor dem gemeinsamen Einbrennen oder gemeinsamen Härten mit der Basislackschicht energiereicher Strahlung ausgesetzt wird, dadurch gekennzeichnet, daß als Klarlacküberzugsmittel ein solches verwendet wird, dessen Harzfestkörper zu 50 bis 98 Gew.-% aus einem thermisch durch Kondensationsreaktionen härtbaren System A) aus hydroxyfunktionellen (Meth)acrylcopolymeren, Polyesterharzen und/oder Polyurethanharzen einzeln oder im Gemisch als Bindemittel, einem Vernetzer auf Triazinbasis und gegebenenfalls mit Reaktivverdünner, das im wesentlichen frei von radikalisch polymerisierbaren Doppelbindungen und im wesentlichen frei von mit radikalisch polymerisierbaren Doppelbindungen des Systems B) anderweitig reaktionsfähigen Gruppen ist, und zu 2 bis 50 Gew.-% aus einem unter Einwirkung energiereicher Strahlung durch radikalische Polymerisation olefinischer Doppelbindungen härtbaren System B) aus Poly- oder Oligomer, gegebenenfalls in Kombination mit Reaktivverdünner besteht, wobei sich die Gew.-%-Angaben zu 100 Gew.-% addieren und wobei das C=C-Äquivalentgewicht des gesamten aus der Summe von A) und B) gebildeten Harzfestkörpers zwischen 300 und 10000 liegt.

Die Gew.-%-Angaben beziehen sich hier und in der Folge jeweils auf die Zusammensetzung des Harzfestkörpers (= Summe aller filmbildenden Bestandteile des Klarlacküberzugsmittels = Summe aller Bestandteile der Systeme A) und B)). Harzfestkörper bedeutet hier und in der Folge theoretischer Harzfestkörper, er berücksichtigt weder eventuelle Verdampfungsverluste noch Einbrennverluste während Applikation und Härtung des Klarlacküberzugsmittels. Dieser Harzfestkörper ergibt zusammen mit gegebenenfalls im Klarlacküberzugsmittel enthaltenen weiteren nichtflüchtigen Bestandteilen dessen Festkörper.

Die Formulierung "im wesentlichen frei von radikalisch polymerisierbaren Doppelbindungen und im wesentlichen frei von mit radikalisch polymerisierbaren Doppelbindungen des Systems B) reaktionsfähigen Gruppen" bedeutet hier und im folgenden, daß das System A) außer eines gegebenenfalls durch technische Verunreinigungen bedingten Gehaltes keine radikalisch polymerisierbaren Doppelbindungen und auch keine mit radikalisch polymerisierbaren Doppelbindungen des Systems B) anderweitig reaktionsfähigen Gruppen enthält.

Weiterhin betrifft die Erfindung Klarlacküberzugsmittel, **dadurch gekennzeichnet, dass** der Harzfestkörper zu 50 bis 98 Gew.-% aus einem thermisch durch Kondensationsreaktionen härtbaren System A) aus hydroxyfunktionellen (Meth)acrylcopolymeren, Polyesterharzen und/oder Polyurethanharzen einzeln oder im Gemisch als Bindemittel, einem Vernetzer auf Triazinbasis und gegebenenfalls mit Reaktivverdünner, das im wesentlichen frei von radikalisch polymerisierbaren Doppelbindungen und im wesentlichen frei von mit radikalisch polymerisierbaren Doppelbindungen des Systems B) anderweitig reaktionsfähigen Gruppen ist, und zu 2 bis 50 Gew.-% aus einem unter Einwirkung energiereicher Strahlung durch radikalische Polymerisation olefinischer Doppelbindungen härtbaren System B) aus Poly- oder Oligomer, gegebenenfalls in Kombination mit Reaktivverdünner besteht, wobei sich die Gew.-%-Angaben zu 100 Gew.-% addieren und wobei das C=C-Äquivalentgewicht des gesamten aus der Summe von A) und B) gebildeten Harzfestkörpers zwischen 300 und 10000 liegt.

Im erfindungsgemäßen Verfahren können für die Erzeugung der farb- und/oder effektgebenden Basislacküberzugsschicht an sich bekannte, durch Spritzen applizierbare farb- und/oder effektgebende Basislacküberzugsmittel verwendet werden, wie sie zur Herstellung von Basislack/Klarlack-Zweischichtlackierungen eingesetzt werden und in großer Zahl beispielsweise aus der Patentliteratur bekannt sind.

Die für die Erzeugung der farb- und/oder effektgebenden Basislackschicht im erfindungsgemäßen Verfahren verwendbaren Basislacke können physikalisch trocknend oder unter Ausbildung kovalenter Bindungen vernetzbar sein. Bei den unter Ausbildung kovalenter Bindungen vernetzenden Basislacken kann es sich um selbstoder fremdvernetzende Systeme handeln.

Die im erfindungsgemäßen Verfahren verwendbaren farb- und/oder effektgebenden Basislacke sind flüssige Überzugsmittel. Es kann sich um ein- oder mehrkomponentige Überzugsmittel handeln, einkomponentige sind bevorzugt. Es kann sich um Systeme auf Basis organischer Lösemittel handeln oder es handelt sich bevorzugt um Wasserbasislacke, deren Bindemittelsysteme in geeigneter Weise, z.B. anionisch, kationisch oder nicht-ionisch stabilisiert sind.

Bei den im erfindungsgemäßen Verfahren verwendbaren Basislacküberzugsmitteln handelt es sich um übliche Lacksysteme, die ein oder mehrere übliche filmbildende Bindemittel enthalten. Sie können, falls die Bindemittel nicht selbstvernetzend oder selbsttrocknend sind, gegebenenfalls auch Vernetzer enthalten. Sowohl die Bindemittel als auch die Vernetzer unterliegen keinerlei Beschränkung. Als filmbildende Bindemittel können beispielsweise Polyester-, Polyurethan- und/oder (Meth)acrylcopolymerharze verwendet werden. (Meth)acryl bedeutet hier und im folgenden Acryl und/oder Methacryl. Im Fall der bevorzugten Wasserbasislacke sind bevorzugt Polyurethanharze enthalten, besonders bevorzugt mindestens zu einem Anteil von 15 Gew.-%, bezogen auf den Festharzgehalt des Wasserbasislacks. Die Auswahl der gegebenenfalls enthaltenen Vernetzer ist unkritisch, sie richtet sich nach der Funktionalität der Bindemittel, d.h. die Vernetzer werden so ausgewählt, daß sie eine zur Funktionalität der Bindemittel komplementäre, reaktive Funktionalität aufweisen. Beispiele für solche komplementäre Funktionalitäten zwischen Bindemittel und Vernetzer sind: Hydroxyl/Methylolether, Hydroxyl/Freies Isocyanat, Hydroxyl/Blockiertes Isocyanat, Carboxyl/Epoxid. Sofern miteinander verträglich, können auch mehrere solcher komplementärer Funktionalitäten in einem Basislack nebeneinander vorliegen. Die gegebenenfalls in den Basislacken verwendeten Vernetzer können einzeln oder im Gemisch vorliegen.

Die beim erfindungsgemäßen Verfahren eingesetzten Basislacke enthalten neben den üblichen physikalisch trocknenden und/oder chemisch vernetzenden Bindemitteln anorganische und/oder organische Buntpigmente und/oder Effektpigmente, wie z.B. Titandioxid, Eisenoxidpigmente, Ruß, Azopigmente, Phthalocyaninpigmente, Chinacridonpigmente, Metallpigmente, z.B. aus Titan, Aluminium oder Kupfer, Interferenzpigmente, wie z.B. titandioxidbeschichtetes Aluminium, beschichteter Glimmer, Graphiteffektpigmente, plättchenförmiges Eisenoxid, plättchenförmige Kupfertphthalocyaninpigmente.

Weiterhin können die Basislacke lackübliche Additive enthalten, wie z.B. Füllstoffe, Katalysatoren, Verlaufsmittel, Antikratermittel oder insbesondere Lichtschutzmittel gegebenenfalls in Kombination mit Antioxidantien.

Die durch Spritzen aufgebrachte farb- und/oder effektgebende Basislackschicht kann als zweischichtiges Basislacksystem bestehend aus einer ersten, modifizierten Basislackschicht und einer zweiten, den eigentlichen Farbton der Mehrschichtlackierung bestimmenden Basislackschicht appliziert werden. Dabei ist der erste Basislack modifiziert, beispielsweise indem er zusätzliche modifizierende Bindemittel- und/oder Füllstoffkomponenten enthält. Er kann beispielsweise aus dem anschließend applizierten, den eigentlichen Farbton bestimmenden Basislack hergestellt werden durch Vermischen mit den zusätzlichen Komponenten.

Bei den im erfindungsgemäßen Verfahren einsetzbaren Klarlacküberzugsmitteln handelt es sich um flüssige Klarlacke. Dabei kann es sich um ein- oder mehrkomponentige Klarlacküberzugsmittel handeln, bevorzugt sind einkomponentig lagerfähige Klarlacküberzugsmittel. Sie können lösemittelfrei oder wasserverdünnbar, beispielsweise wäßrig emulgiert, sein, oder es handelt sich bevorzugt um Systeme auf der Basis von Lösemitteln. Es ist erfindungswesentlich, daß die Klarlacküberzugsmittel einen Harzfestkörper aufweisen, der zu 50 bis 98, bevorzugt zu 70 bis 95 Gew.-% aus einem thermisch durch Kondensationsreaktionen härtbaren System A) wie im Anspruch 1 definiert, das im wesentlichen frei von radikalisch polymerisierbaren Doppelbindungen und im wesentlichen frei von mit radikalisch polymerisierbaren Doppelbindungen des Systems B) anderweitig reaktionsfähigen Gruppen ist, und zu 2 bis 50, bevorzugt zu 5 bis 30 Gew.-% aus einem unter Einwirkung energiereicher Strahlung durch radikalische Polymerisation olefinischer Doppelbindungen härtbaren System B) besteht, wobei sich die Gew.-%-Angaben zu 100 Gew.-% addieren und wobei das C=C-Äquivalentgewicht des gesamten aus der Summe von A) und B) gebildeten Harzfestkörpers zwischen 300 und 10000, bevorzugt zwischen 350 und 3000, insbesondere zwischen 400 und 1500 liegt.

Bevorzugt sind fremdvernetzende Systeme A) wie im Anspruch 1 definiert, in denen Bindemittel, gegebenenfalls enthaltene Reaktivverdünner und Vernetzer in einem dem angestrebten Vernetzungsgrad angepaßten stöchiometrischen Verhältnis von im allgemeinen 60 bis 90 Teile Bindemittel und gegebenenfalls Reaktivverdünner zu 40 bis 10 Teile Vernetzer vorliegen, wobei die Summe 100 Teile beträgt.

Systeme A) sind solche, die als Bindemittel hydroxyfunktionelle (Meth)acrylcopolymere, Polyesterharze und/oder Polyurethanharze einzeln oder im Gemisch aufweisen und gegebenenfalls zusätzlich hydroxyfunktionelle Reaktivverdünner enthalten, während als Vernetzer für die hydroxyfunktionellen Bindemittel und gegebenenfalls enthaltenen hydroxyfunktionellen Reaktivverdünner mit deren Hydroxylguppen unter Ether- und/oder Estergruppenbildung vernetzende Komponenten auf Triazinbasis, beispielsweise Aminoplastharze, insbesondere Melaminharze und/oder Umesterungsvemetzer enthalten sind.

Beispiele für in den Systemen A) als Bindemittel einsetzbare hydroxyfunktionelle Polyesterharze sind übliche, beispielsweise solche mit einem Zahlenmittel der Molmasse (Mn) von 500 bis 5000, bevorzugt von 1000 bis 3000 und Hydroxylzahlen von 30 bis 450, bevorzugt von 50 bis 280 mg KOH/g.

Beispiele für in den Systemen A) als Bindemittel einsetzbare hydroxyfunktionelle Polyurethanharze sind übliche, beispielsweise solche mit einem Zahlenmittel der Molmasse (Mn) von 500 bis 5000, bevorzugt von 1000 bis 3000 und Hydroxylzahlen von 30 bis 450, bevorzugt von 50 bis 280 mg KOH/g.

Beispiele für in den Systemen A) als Bindemittel einsetzbare hydroxyfunktionelle (Meth)acryl-Copolymere sind übliche, beispielsweise solche mit einem Zahlenmittel der Molmasse (Mn) zwischen 1000 und 10000 und Hydroxylzahlen von 30 bis 300, bevorzugt von 50 bis 250 mg KOH/g. Die (Meth)acryl-Copolymeren können in Gegenwart von oligomeren oder polymeren Polyester- und/oder Polyurethanharzen hergestellt worden sein.

Beispiele für in den Systemen A) einsetzbare hydroxyfunktionelle Reaktivverdünner sind niedrigmolekulare Verbindungen mit mindestens zwei Hydroxylgruppen pro Molekül und Hydroxylzahlen im Bereich von 250 bis 700 mg KOH/g. Geeignet sind oligomere oder polymere Polyole, wie Polyetherpolyole, Oligoesterpolyole, Polycarbonatpolyole und Oligourethanpolyole. Geeignet sind beispielsweise Handelsprodukte, wie durch Reaktion von Polyolen mit Caprolacton erhältliche Polycaprolactonpolyole, durch Reaktion von Oxiranverbindungen mit Polyolen und/oder Wasser erhältliche Polyetherpolyole wie z.B. Triethylenglykol, oder durch Reaktion von Polyaminen mit cyclischen Carbonaten erhältliche Oligourethanpolyole.

Beispiele für in den Systemen A) mit den hydroxyfunktionellen Bindemitteln und zusätzlich gegebenenfalls enthaltenen Reaktivverdünnern unter Ethergruppenbildung vernetzenden Komponenten auf Triazinbasis sind beispielsweise als Vernetzer übliche Aminoplastharze, bevorzugt Melaminharze, wie z.B. methanolveretherte Melaminharze, wie die Handelsprodukte Cymel 325, Cymel 327, Cymel 350 und Cymel 370, Maprenal MF 927. Weitere Beispiele für verwendbare Melaminharze sind butanol- oder isobutanolveretherte Melaminharze wie z.B. die Handelsprodukte Setamin US 138 oder Maprenal MF 610; mischveretherte Melaminharze, die sowohl butanol- als auch methanolverethert sind, wie z.B. Cymel 254, sowie Hexamethoxymethylmelamin (HMMM) wie z.B. Cymel 301 oder Cymel 303, wobei letztere zur Vernetzung einen externen Säurekatalysator wie z.B. p-Toluolsulfonsäure benötigen können. Derartige Säurekatalysatoren können gegebenenfalls mit Aminen oder Polyepoxiden ionisch oder nicht-ionisch blockiert sein.

Beispiele für in den Systemen A) mit den hydroxyfunktionellen Bindemitteln und zusätzlich gegebenenfalls enthaltenen Reaktivverdünnern unter Estergruppenbildung, insbesondere unter Bildung von Urethangruppen (Carbaminsäureestergruppen) vernetzende Komponenten auf Triazinbasis sind Umesterungsvernetzer, wie beispielsweise bevorzugt Tris(alkoxycarbonylamino)triazin.

Insbesondere bevorzugt ist es im erfindungsgemäßen Verfahren, Klarlacküberzugsmittel zu verwenden, deren Harzfestkörper als System A) ein fremdvernetzendes System aus hydroxyfunktionellem Bindemittel, insbesondere auf (Meth)acrylcopolymer-Basis und aus einem oder mehreren Aminoplastharzen als Vernetzer enthält.

Bei den Systemen B) handelt es sich um radikalisch härtende Systeme, d.h. durch Einwirkung energiereicher Strahlung auf das System B) entstehen Radikale, die eine Vernetzung des Systems B) durch radikalische Polymerisation seiner olefinischen Doppelbindungen auslösen. Die Systeme B) sind so zusammengesetzt, daß sie unter den Applikations- und Härtungsbedingungen des sie enthaltenden Klarlacküberzugsmittels nicht bzw. nicht in nennenswertem Umfang mit dem jeweiligen im gleichen Klarlacküberzugsmittel enthaltenen System A) vernetzen.

Bei den radikalisch härtenden Systemen handelt es sich um Prepolymere, wie Polyoder Oligomere, die radikalisch polymerisierbare, olefinische Doppelbindungen, insbesondere (Meth)acryloylgruppen im Molekül aufweisen. Die Prepolymeren enthalten neben den radikalisch polymerisierbaren olefinischen Doppelbindungen bevorzugt keine funktionellen Gruppen, die eine Vernetzung mit Bestandteilen des Systems A) bewirken können. Die Prepolymeren können in Kombination mit Reaktivverdünnern, d.h. reaktiven flüssigen Monomeren, vorliegen. Bevorzugt enthalten die radikalisch härtenden Systeme auch Photoinitiatoren.

Beispiele für Prepolymere oder Oligomere sind (meth)acrylfunktionelle (Meth)acrylcopolymere, die aromatische Struktureinheiten beispielsweise in Form von einpolymerisiertem Styrol, enthalten können, sowie von aromatischen Struktureinheiten bevorzugt freie, auf aliphatischen und/oder cycloaliphatischen Bausteinen basierende Epoxidharz(meth)acrylate, Polyester(meth)acrylate, Polyether(meth)acrylate, Polyurethan(meth)acrylate, ungesättigte Polyester, ungesättigte Polyurethane oder Silikon(meth)acrylate mit zahlenmittleren Molekularmassen (Mn) bevorzugt im Bereich von 200 bis 10000, besonders bevorzugt von 500 bis 3000 und mit durchschnittlich 2 bis 20, bevorzugt 3 bis 10 radikalisch polymerisierbaren, olefinischen Doppelbindungen pro Molekül.

Werden Reaktivverdünner verwendet, so werden sie in Mengen von 1 bis 50 Gew.-% eingesetzt, bevorzugt von 5 bis 30 Gew.-%, bezogen auf das Gesamtgewicht von Prepolymeren und Reaktivverdünnern. Es handelt sich um niedermolekulare definierte Verbindungen, die mono-, di- oder polyungesättigt sein können. Beispiele für solche Reaktivverdünner sind: (Meth)acrylsäure und deren Ester, Maleinsäure und deren Halbester, Vinylacetat, Vinylether, substituierte Vinylharnstoffe, Ethylen- und Propylenglykoldi(meth)acrylat, 1,3- und 1,4-Butandioldi(meth)acrylat, Vinyl(meth)acrylat, Allyl(meth)acrylat, Glycerintri- , -di- und -mono(meth)acrylat, Trimethylolpropantri-, -di- und -mono(meth)acrylat, Styrol, Vinyltoluol, Divinylbenzol, Pentaerythrittri- und -tetra(meth)acrylat, Di- und Tripropylenglykoldi(meth)acrylat, Hexandioldi(meth)acrylat, sowie deren Gemische.

Die bevorzugt im radikalisch härtenden System B) enthaltenen Photoinitiatoren werden z.B. in Mengen von 0,1 bis 5 Gew.-%, bevorzugt von 0,5 bis 3 Gew.-% eingesetzt, bezogen auf die Summe von radikalisch polymerisierbaren Prepolymeren, Reaktivverdünnern und Photoinitiatoren. Es ist günstig, wenn ihre Absorption im Wellenlängenbereich von 260 bis 450 nm liegt. Beispiele für Photoinitiatoren sind Benzoin und -derivate, Acetophenon und -derivate, z.B. 2,2-Diacetoxyacetophenon, Benzophenon und -derivate, Thioxanthon und -derivate, Anthrachinon, 1-Benzoylcyclohexanol, phosphororganische Verbindungen, wie z.B. Acylphospinoxide. Die Photoinitiatoren können allein oder in Kombination eingesetzt werden. Außerdem können weitere synergistische Komponenten, z.B. tertiäre Amine, eingesetzt werden.

Neben den vorstehend genannten Bestandteilen der Systeme B) können diese zusätzlich thermisch aktivierbare Radikalinitiatoren enthalten. Diese bilden ab 80 bis 120°C Radikale. Beispiele für thermolabile Radikalinitiatoren sind: organische Peroxide, organische Azoverbindungen oder C-C-spaltende Initiatoren, wie Dialkylperoxide, Peroxocarbonsäuren, Peroxodicarbonate, Peroxidester, Hydroperoxide, Ketonperoxide, Azodinitrile oder Benzpinakolsilylether. Die bevorzugten Einsatzmengen liegen zwischen 0,1 bis 5 Gew.-%, bezogen auf die Summe aus radikalisch polymerisierbaren Prepolymeren, Reaktivverdünnern und Radikalinitiatoren. Die Radikalinitiatoren können auch im Gemisch eingesetzt werden.

Die im erfindungsgemäßen Verfahren einsetzbaren Klarlacke können neben den Systemen A) und B) transparente Pigmente oder Füllstoffe sowie lackübliche Additive, wie z.B. Antioxidantien, Sensibilisatoren, Katalysatoren, Verlaufsmittel, Farbstoffe, Rheologiesteuerer sowie Lichtschutzmittel in lacküblichen Mengen enthalten.

Die im erfindungsgemäßen Verfahren einsetzbaren Klarlacküberzugsmittel können lösemittelfrei formuliert werden, ihr Festkörper beträgt dann 100 Gew.-% und setzt sich zusammen aus dem durch die Systeme A) plus B) gebildeten Harzfestkörper sowie weiteren nichtflüchtigen Bestandteilen. Bevorzugt weisen die im erfindungsgemäßen Verfahren einsetzbaren Klarlacküberzugsmittel einen Festkörpergehalt von 40 bis 80 Gew.-% auf. Sie enthalten dann flüchtige organische Lösemittel, wie beispielsweise Glykolether, wie Butylglykol, Butyldiglykol, Dipropylenglykoldimethylether, Dipropylenglykolmonomethylether, Ethylenglykoldimethylether; Glykoletherester, wie Ethylglykolacetat, Butylglykolacetat, 3-Methoxy-n-butylacetat, Butyldiglykolacetat, Methoxypropylacetat; Ester, wie Butylacetat, Isobutylacetat, Amylacetat; Ketone, wie Methylethylketon, Methylisobutylketon, Diisobutylketon, Cyclohexanon, Isophoron; Alkohole, wie Methanol, Ethanol, Propanol, Butanol, aromatische Kohlenwasserstoffe, wie Xylol, Solvesso 100 (eingetragenes Warenzeichen für ein Gemisch aromatischer Kohlenwasserstoffe mit einem Siedebereich von 155 bis 185°C) und aliphatische Kohlenwasserstoffe, oder es handelt sich um wäßrige Überzugsmittel, die als Emulsion vorliegen. Dabei kann der emulgierte Zustand durch Zusatz externer Emulgatoren erreicht werden oder es handelt sich bei den Systemen A) und/oder B) um Systeme, die in Wasser selbstemulgierend wirkende Gruppen, beispielsweise ionische Gruppen enthalten. Die Emulsionssysteme können ebenfalls organische Lösemittel, insbesondere wassermischbare Lösemittel enthalten.

Überraschenderweise sind die im erfindungsgemäßen Verfahren einsetzbaren Klarlacküberzugsmittel auf einfache Weise herstellbar durch Vermischen der den Harzfestkörper ausmachenden Systeme A) und B) bzw. durch Vermischen ihrer Bestandteile im 50 bis 98 Teile A)- zu 50 bis 2 Teile B)-, bevorzugt im 70 bis 95 Teile A)- zu 30 bis 5 Teile B)-Feststoffgewichtsverhältnis (unter Beachtung der zum C=C-Äquivalentgewicht des Harzfestkörpers vorstehend gemachten Angaben) mit den gegebenenfalls weiteren nicht zum Harzfestkörper beitragenden vorstehend erläuterten Bestandteilen. Bevorzugt erfolgt das Vermischen unter Verwendung handelsüblicher und/oder einfach zu synthetisierender Bestandteile, wie sie vorstehend erläutert sind. Beim Vermischen ist die Reihenfolge der Zugabe der einzelnen Bestandteile im Prinzip beliebig und richtet sich nach praktischen Gesichtspunkten und unterliegt lediglich im Fall der weniger bevorzugten mehrkomponentigen Klarlacküberzugsmittel den mehrkomponentensystembedingten Einschränkungen. Besonders bevorzugt werden die im erfindungsgemäßen Verfahren eingesetzten Klarlacküberzugsmittel hergestellt durch Hinzumischen eines Systems B) und falls gewünscht organischem Lösemittel zu einem an sich fertigen einkomponentigen Einbrennklarlack, dessen Harzfestkörper aus einem thermisch durch Additions- und/oder Kondensationsreaktionen härtbaren System A), das im wesentlichen frei von radikalisch polymerisierbaren Doppelbindungen und im wesentlichen frei von mit radikalisch polymerisierbaren Doppelbindungen des Systems B) anderweitig reaktionsfähigen Gruppen ist, unter Beachtung der vorstehend als erfindungswesentlich erläuterten Beschränkungen hinsichtlich Harzfestkörperzusammensetzung und C=C-Äquivalentgewicht des Harzfestkörpers.

Der Auftrag der farb- und/oder effektgebenden Basislackschicht erfolgt im erfindungsgemäßen Verfahren auf ein gegebenenfalls vorbeschichtetes Substrat, insbesondere auf vorbeschichtete Automobilkarossen oder deren Teile. Beispiele für Vorbeschichtungen auf Automobilkarossen oder deren Teilen sind eine Elektrotauchgrundierungsschicht, eine zweischichtige Vorbeschichtung bestehend aus einer Elektrotauchgrundierungsschicht und einer Spritzfüllerschicht oder eine zweischichtige Vorbeschichtung bestehend aus einer Elektrotauchgrundierungsschicht und einer zweiten elektrophoretisch aufgebrachten Überzugsschicht.

Der Auftrag der farb- und/oder effektgebenden Basislackschicht erfolgt durch Spritzen aus einem farb- und/oder effektgebenden Basislack in einer vom Farbton abhängigen Trockenschichtdicke von im allgemeinen zwischen 10 bis 25 µm.
Im Anschluß an die Applikation der farb- und/oder effektgebenden Basislacküberzugsschicht erfolgt nach einer kurzen Ablüftphase, z.B. bei 20 bis 80°C, der Auftrag der Klarlackschicht aus dem erfindungsgemäßen Klarlacküberzugsmittel in einer Trockenschichtdicke von im allgemeinen zwischen 25 und 50 µm im Naß-in-Naß-Verfahren. Gegebenfalls kann, insbesondere bei Verwendung organischer Lösemittel und/oder Wasser enthaltender Klarlacküberzugsmittel kurz abgelüftet werden. Oftmals ist es zweckmäßig und bevorzugt, das Ablüften durch Erwärmen, beispielsweise bevorzugt unter Zuhilfenahme von Infrarotbestrahlung zu unterstützen. Applikation und Ablüften können bevorzugt so durchgeführt werden, daß ein Zutritt von Licht einer Wellenlänge kleiner 380 nm weitestgehend unterbunden wird.

Der Klarlacküberzug kann sich, muß sich aber nicht ganzflächig über das beispielsweise dreidimensionale Substrat erstrecken. So ist es beispielsweise im erfindungsgemäßen Verfahren bevorzugt eine Beschichtung aus dem Klarlacküberzugsmittel im wesentlichen nur an äußeren Bereichen, insbesondere an sichtbaren Flächen eines dreidimensionalen Substrats durchzuführen, d.h. beispielsweise nicht in engen Hohlräumen einer Karosserie.

Im Anschluß an die gegebenenfalls gewährte Ablüftphase wird die Klarlacküberzugsschicht energiereicher Strahlung ausgesetzt. Dabei handelt es sich um Elektronenstrahlung oder bevorzugt um ultraviolette Strahlung. Im Falle von Elektronensttahlung muß unter Inertgasatmosphäre gearbeitet werden, beim Arbeiten mit UV-Strahlung ist dies nicht notwendig. UV-Strahlenquellen mit Emissionen im Wellenlängenbereich von 180 bis 420 nm, bevorzugt von 200 bis 400 nm sind bevorzugt. Beispiele für solche UV-Strahlenquellen sind gegebenenfalls dotierte Quecksilberhochdruck-, -mitteldruck- und -niederdruckstrahler, Gasentladungsröhren, wie z.B. Xenonniederdrucklampen, gepulste und ungepulste UV-Laser, UV-Punktstrahler, wie z.B. UV-emittierende Dioden, Schwarzlichtröhren, Hochenergie-Elektronenblitz-Einrichtungen, wie z.B. UV-Blitzlampen.

Die UV-Strahlenquellen können kontinuierlich oder diskontinuierlich arbeitend ausgelegt sein. Im letzteren Fall sind Laserlichtquellen geeignet. Eine andere Möglichkeit für kurzzeitig an- und ausschaltbare (taktbare) UV-Quellen besteht in der Vorschaltung von z.B. beweglichen Blenden oder es werden UV-Blitzlampen eingesetzt.

Als Hilfselemente können übliche in der technischen Optik verwendete Lichtsteuersysteme, wie z.B. Absorptionsfilter, Reflektoren, Spiegel, Linsensysteme, Lichtwellenleiter eingesetzt werden.

Die Anordnung der Strahlenquellen ist im Prinzip bekannt, sie kann den Gegebenheiten des Substrats, beispielsweise einer Automobilkarosserie oder deren Teilen angepaßt werden.

Beispielsweise kann das Substrat im Ganzen bestrahlt werden, z.B. während des Durchlaufens eines UV-Bestrahlungstunnels oder es kann ein Strahlungsvorhang verwendet werden, der sich relativ zum Substrat bewegt. Außerdem kann über eine automatische Vorrichtung eine punktförmige Strahlenquelle oder ein Kleinflächenstrahler über das Substrat geführt werden.

Der Abstand der Strahlenquelle kann fest sein oder er wird auf einen gewünschten Wert der Substratform angepaßt. Die Abstände der Strahlenquellen liegen bevorzugt im Bereich von 2 bis 50 cm, besonders bevorzugt 5 bis 30 cm, zur Naßlackoberfläche. Im Falle der Verwendung eines UV-Lasers ist ein größerer Abstand möglich.

Selbstverständlich können die beispielhaft aufgezählten Verfahrensmaßnahmen auch kombiniert werden. Das kann in einem einzigen Prozeßschritt erfolgen oder in zeitlich oder räumlich voneinander getrennten Prozeßschritten.

Die Bestrahlungsdauer liegt beispielsweise im Bereich der Dauer eines UV-Blitzes von beispielsweise 100 Millisekunden bis 5 Minuten, je nach verwendetem Bestrahlungsverfahren und Art und Anzahl der UV-Strahlungsquellen. Bevorzugt ist eine Bestrahlungsdauer, d.h. eine eigentliche Einwirkungszeit der UV-Strahlung auf die Klarlacküberzugsschicht von unter 5 Minuten.

Bei der Beschichtung dreidimensionaler Substrate von komplizierter Geometrie wie z.B. Kraftfahrzeugkarossen mit strahlenhärtenden Lacken ergibt sich oftmals die Problematik einer unzureichenden Aushärtung aufgrund einer nicht ausreichenden Zugänglichkeit für die energiereiche Strahlung, beispielsweise in Schattenbereichen, wie z.B. Hohlräumen, Falzen und anderen konstruktionsbedingten Hinterschneidungen. Dieses Problem kann mit dem erfindungsgemäßen Verfahren vermieden werden, denn der mit dem erfindungsgemäßen Verfahren erreichbare Härtungszustand des Klarlacks reicht für die abgeschatteten Bereiche vollkommen aus, d.h. der durch den thermischen Härtungsschritt erreichbare Härtungszustand des Klarlacks an für den Betrachter an sich nicht sichtbaren Stellen ist ausreichend hoch.

Desweiteren ist es im erfindungsgemäßen Verfahren bevorzugt die Beschichtung aus dem Klarlacküberzugsmittel im wesentlichen nur an äußeren Bereichen, insbesondere an sichtbaren Flächen eines dreidimensionalen Substrats durchzuführen, d.h. beispielsweise nicht in engen Hohlräumen einer Karosserie. Dann ist die Frage nach einer eventuellen unzureichenden Aushärtung der Klarlackschicht in abgeschatteten Bereichen praktisch bedeutungslos. Falls gewünscht können abgeschattete Bereiche dennoch bestrahlt werden, beispielsweise indem Punkt-, Kleinflächen- oder Rundumstrahler gegebenenfalls unter Verwendung einer automatischen Bewegungseinrichtung eingesetzt werden, beispielsweise für das Bestrahlen von Innen-Hohlräumen oder Kanten. Nach der Bestrahlung ist die Klarlacküberzugsschicht klebfrei und das Substrat wird dem Einbrennprozeß zugeführt, währenddessen die Klarlacküberzugsschicht gemeinsam mit der farb- und/oder effektgebenden Basislackschicht bei erhöhten Temperaturen beispielsweise von 80 bis 160°C eingebrannt wird oder bei niedrigeren Temperaturen, beispielsweise von 20 bis 60°C gehärtet. Das erfindungsgemäße Verfahren bietet den Vorteil, falls gewünscht eine Verkürzung der üblichen Einbrenndauer zu ermöglichen, insbesondere beim Vergleich mit der notwendigen Einbrenndauer für eine entsprechende aus einem vom System B) freien Klarlacküberzugsmittel hergestellten Klarlacküberzugsschicht. Die Endhärte wird im erfindungsgemäßen Verfahren ebenfalls schneller erreicht, beispielsweise unmittelbar nach dem Einbrennprozeß.
Das erfindungsgemäße nach dem bekannten Naß-in-Naß Prinzip arbeitende Verfahren erlaubt die Herstellung von Basislack/Klarlack-Zweischichtlackierungen, insbesondere auf Kraftfahrzeugen und deren Teilen mit hervorragendem optisch-ästhetischem Eindruck. Das erfindungsgemäße Verfahren kann angewendet werden sowohl bei der Automobilerst-, der Automobilteile- als auch der Autoreparaturlackierung. Ein Ablaufen des Klarlacks an senkrechten Flächen während des Einbrennens wird wirksam verhindert. Die mit dem erfindungsgemäßen Verfahren erhaltenen Klarlackschichten weisen eine reduzierte Anfälligkeit gegen Chemikalien und Verkratzungen, insbesondere gegen Säure und Waschverkratzungen auf. Überraschenderweise lassen sich die vorstehend erläuterten Vorteile mit dem erfindungsgemäßen Verfahren erreichen, wenngleich der Harzfestkörper der im erfindungsgemäßen Verfahren verwendeten Klarlacküberzugsmittel einfach zusammengesetzt ist und die den Harzfestkörper bildenden jeweils vernetzenden Systeme A) und B) untereinander keine Vernetzung eingehen. Die Klarlacküberzugsmittel können aus bekannten, beispielsweise handelsüblichen Komponenten formuliert werden.

### Herstellung von Mehrschichtlackierungen

### Beispiel 1 (Vergleich)

Auf ein mit einer Kataphoresegrundierung und Füllerschicht versehenes Blech wird ein silberfarbener Wasserbasislack in einer Trockenschichtdicke von 15 µm aufgespritzt und 10 Minuten bei 80°C vorgetrocknet. Anschließend wird ein handelsüblicher Autoserienklarlack (52 Gew.-% Harzfestkörper, gebildet aus hydroxyfunktionellem Acrylatbindemittel und Melaminharzvernetzer) in einer Trockenschichtdicke von 40 µm aufgespritzt, 10 Minuten bei Raumtemperatur und danach 1 Minute mit Unterstützung durch Infrarotstrahlung abgelüftet und anschließend 15 Minuten bei 140°C (Objekttemperatur) eingebrannt.

### Beispiel 2

1000 g des Klarlacks aus Beispiel 1 werden mit 52 g einer Mischung aus
75 Gewichtsteilen eines hexafunktionellen, aliphatischen Urethanacrylats (theoretisches Molgewicht 800),
22 Gewichtsteilen Hexandioldiacrylat,
1,5 Gewichtsteilen eines Photoinitiators vom Acylphosphinoxid-Typ und
1,5 Gewichtsteilen eines Photoinitiators vom Acetophenon-Typ
homogen vermischt.

Anschließend wird unter Verwendung des so erhaltenen Klarlacks wie in Beispiel 1 gearbeitet mit dem Unterschied, daß man zwischen dem Ablüften und Einbrennen 10 mal innerhalb 40 Sekunden mit einem UV-Blitz auf die Klarlackoberfläche einwirkt (Xenon-gefüllte UV-Blitzlampe, 3500 Ws, Objektabstand 20 cm).

### Beispiel 3

1000 g des Klarlacks aus Beispiel 1 werden mit 104 g der in Beispiel 2 genannten Mischung homogen vermischt.

Anschließend wird unter Verwendung des so erhaltenen Klarlacks wie in Beispiel 2 gearbeitet.

### Beispiel 4

1000 g des Klarlacks aus Beispiel 1 werden mit 234 g einer Mischung aus
75 Gewichtsteilen eines hexafunktionellen, aliphatischen Urethanacrylates (theoretisches Molgewicht 800),
22 Gewichtsteilen Tripropylenglykoldiacrylat,
1,5 Gewichtsteilen eines Photoinitiators vom Acylphosphinoxid-Typ und
1,5 Gewichtsteilen eines Photoinitiators vom Acetophenon-Typ
homogen vermischt.

Anschließend wird unter Verwendung des so erhaltenen Klarlacks wie in Beispiel 2 gearbeitet.

### Beispiel 5

1000 g des Klarlacks aus Beispiel 1 werden mit 26 g einer Mischung aus
75 Gewichtsteilen eines hexafunktionellen, aliphatischen Urethanacrylates (theoretisches Molgewicht 1000),
22 Gewichtsteilen Trimethylolpropantriacrylat,
1,5 Gewichtsteilen eines Photoinitiators vom Acylphosphinoxid-Typ und
1,5 Gewichtsteilen eines Photoinitiators vom Acetophenon-Typ
homogen vermischt.

Anschließend wird unter Verwendung des so erhaltenen Klarlacks wie in Beispiel 2 gearbeitet.

### Beispiel 6

1000 g des Klarlacks aus Beispiel 1 werden mit 88 g der in Beispiel 5 genannten Mischung homogen vermischt.

Anschließend wird unter Verwendung des so erhaltenen Klarlacks wie in Beispiel 2 gearbeitet.

### Beispiel 7

1000 g des Klarlacks aus Beispiel 1 werden mit 78 g einer Mischung aus
75 Gewichtsteilen eines hexafunktionellen, aliphatischen Urethanacrylates (theoretisches Molgewicht 800),
22 Gewichtsteilen Trimethylolpropantriacrylat,
1,5 Gewichtsteilen eines Photoinitiators vom Acylphosphinoxid-Typ und
1,5 Gewichtsteilen eines Photoinitiators vom Acetophenon-Typ
homogen vermischt.

Anschließend wird unter Verwendung des so erhaltenen Klarlacks wie in Beispiel 1 gearbeitet mit dem Unterschied, daß man zwischen Ablüften und Einbrennen eine UV-Bestrahlung der Klarlackoberfläche vornimmt (Quecksilbermitteldruckstrahler, 120 W/cm, Bandgeschwindigkeit 3 m/min, Objektabstand 10 cm).

Tabelle 1 stellt Eigenschaften der in Vergleichsbeispiel 1 sowie in den erfindungsgemäßen Beispielen 2 bis 7 erhaltenen Mehrschichtlackierungen zusammen.

**Tabelle 1**

| Bsp. | Pendelhärte | Pendelhärte nach Xyloltest¹⁾ | Kratzfestigkeit²⁾ | | Säurefestigkeit³⁾ |
|---|---|---|---|---|---|
| | (Schwingungen) | | a | b | |
| 1 | 91 | 27 | 90 | 55 | 11 |
| 2 | 97 | 42 | 93 | 62 | 20 |
| 3 | 103 | 105 | 89 | 75 | 22 |
| 4 | 115 | 117 | 90 | 71 | ./. |
| 5 | 95 | 90 | 93 | 60 | 22 |
| 6 | 108 | 98 | 93 | 63 | 24 |
| 7 | 120 | 120 | 92 | 79 | >30 |

| | | | | | |
|---|---|---|---|---|---|
| ¹⁾ Der Xyloltest erfolgt durch 10minütige Einwirkung eines xylolgetränkten Wattebausches auf die Mehrschichtlackierung. Die Messung der Pendelhärte erfolgt jeweils nach einer Erholungszeit von 1 Stunde. | | | | | |
| ²⁾ Angegeben werden der Anfangsglanz vor Kratzbeanspruchung (Spalte a) und der Restglanz nach der nachstehend beschriebenen Kratzbeanspruchung (Spalte b), jeweils bestimmt durch Glanzmessung bei einem Winkel von 20°. Die Kratzbeanspruchung erfolgt mit der Hub-Schub-Methode mit dem Erichsen-Peters-Klotz, Typ Nr. 265. Die Abmessungen sind: 75 x 75 x 50 mm, Grundfläche = 3750 mm². Das Gewicht beträgt 2 kg. Unter den Schleifklotz wird mit Klettband ein 2,5 mm dicker Wollfilz, Abmaße 30 x 50 mm, geklebt. Dann wird 1 g einer wasserlöslichen Schleifpaste gleichmäßig auf der Auflagefläche verteilt. Es werden 10 Doppelhübe in 9 s durchgeführt. Der Hub-Schub erfolgt parallel zur 75 mm-Kante des Blockes, der Schleifweg beträgt 90 mm in einer Richtung. Anschließend wird mit kaltem Wasser abgespült und die Glanzmessung durchgeführt. | | | | | |
| ³⁾ Zur Prüfung der Säurefestigkeit wird der Tropfentest mit 10 %iger Schwefelsäure gewählt. Die Prüfbleche werden auf eine beheizbare Platte gelegt und auf 60°C geheizt. Dabei muß gewährleistet sein, daß die Bleche auf der Heizplatte plan aufliegen. Am Ende der Aufheizphase, d.h. bei 60°C wird pro Minute ein Tropfen der Säure auf die Klarlackoberfläche appliziert. Die Gesamtzeit beträgt 30 Minuten. Nach Ablauf der Prüfzeit wird die Lackierung mit Wasser abgewaschen. Es wird die Einwirkzeit in Minuten angegeben, bei der die erste sichtbare Filmveränderung (Quellung) auftrat. | | | | | |

## Patentansprüche

1. Verfahren zur Lackierung von Substraten mit einer farb- und/oder effektgebenden Basislack- und einer Klarlackdeckschicht, bei dem auf einem Substrat eine farb- und/oder effektgebende Basislackschicht aus einem Basislacküberzugsmittel aufgebracht und diese im Naß-in-Naß-Verfahren mit einem Klarlacküberzug versehen wird, wobei die unausgehärtete Klarlackschicht vor dem gemeinsamen Einbrennen oder gemeinsamen Härten mit der Basislackschlcht energiereicher Strahlung ausgesetzt wird, **dadurch gekennzeichnet, dass** als Klarlacküberzugsmittel ein solches verwendet wird, dessen Harzfestkörper zu 50 bis 98 Gew.-% aus einem thermisch durch Kondensationsreaktionen härtbaren System A) aus hydroxyfunktionellen (Meth)acrylcopolymeren, Polyesterharzen und/oder Polyurethanharzen einzeln oder Im Gemisch als Bindemittel, einem Vernetzer auf Triazinbasis und gegebenenfalls mit Reaktivverdünner, das im wesentlichen frei von radikalisch polymerisierbaren Doppelbindungen und im wesentlichen frei von mit radikalisch polymerisierbaren Doppelbindungen des Systems B) anderweitig reaktionsfähigen Gruppen ist, und zu 2 bis 50 Gew.-% aus einem unter Einwirkung energiereicher Strahlung durch radikalische Polymerisation olefinischer Doppelbindungen härtbaren System B) aus Poly- oder Oligomer, gegebenenfalls in Kombination mit Reaktivverdünner besteht, wobei sich die Gew.-%-Angaben zu 100 Gew.-% addieren und wobei das C=C-Äquivalentgewicht des gesamten aus der Summe von A) und B) gebildeten Harzfestkörpers zwischen 300 und 10000 liegt.

2. Klarlacküberzugsmlttel, **dadurch gekennzeichnet, dass** der Harzfestkörper zu 50 bis 98 Gew.-% aus einem thermisch durch Kondensationsreaktionen härtbaren System A) aus hydroxyfunktionellen (Meth)acrylcopolymeren, Polyesterharzen und/oder Polyurethanharzen einzeln oder im Gemisch als Bindemittel, einem Vernetzer auf Triazinbasis und gegebenenfalls mit Reaktivverdünner, das im wesentlichen frei von radikalisch polymerisierbaren Doppelbindungen und im wesentlichen frei von mit radikalisch polymerisierbaren Doppelbindungen des Systems B) anderweitig reaktionsfähigen Gruppen ist, und zu 2 bis 50 Gew.-% aus einem unter Einwirkung energiereicher Strahlung durch radikalische Polymerisation olefinischer Doppelbindungen härtbaren System B) aus Poly- oder Oligomer, gegebenenfalls in Kombination mit Reaktivverdünner besteht, wobei sich die Gew.-%-Angaben zu 100 Gew.-% addieren und wobei das C=C-Äquivalentgewicht des gesamten aus der Summe von A) und B) gebildeten Harzfestkörpers zwischen 300 und 10000 liegt.

3. Verfahren nach Anspruch 1, **dadurch gekennzeichnet, dass** das Klarlacküberzugsmittel einen Harzfestkörper aufweist, der zu 70 bis 95 Gew.% aus einem thermisch durch Kondensationsreaktionen härtbaren System A), das im wesentlichen frei von radikalisch polymerisierbaren Doppelbindungen und im wesentlichen frei von mit radikalisch polymerisierbaren Doppelbindungen des Systems B) anderweitig reaktionsfähigen Gruppen ist, und zu 5 bis 30 Gew.-% aus einem unter Einwirkung energiereicher Strahlung durch radikalische Polymerisation olefinischer Doppelbindungen härtbaren System B) besteht, wobei sich die Gew.-%-Angaben zu 100 Gew.-% addieren und wobei das C=C-Äquivalentgewicht des gesamten aus der Summe von A) und B) gebildeten Harzfestkörpers zwischen 300 und 10000 liegt.

4. Verfahren nach Anspruch 1 oder 3, **dadurch gekennzeichnet, dass** das C=C-Äquivalentgewicht des gesamten aus der Summe von A) und B) gebildeten Harzfestkörpers zwischen 400 und 1500 liegt.

5. Klarlacküberzugsmittel nach Anspruch 2, **dadurch gekennzeichnet, dass** dieses einen Harzfestkörper aufweist, der zu 70 bis 95 Gew.% aus einem thermisch durch Kondensationsreaktionen härtbaren System A), das im wesentlichen frei von radikalisch polymerisierbaren Doppelbindungen und Im wesentlichen frei von mit radikalisch polymerisierbaren Doppelbindungen des Systems B) anderweitig reaktionsfähigen Gruppen ist, und zu 5 bis 30 Gew.-% aus einem unter Einwirkung energiereicher Strahlung durch radikalische Polymerisation olefinischer Doppelbindungen härtbaren System B) besteht, wobei sich die Gew.-%-Angaben zu 100 Gew.-% addieren und wobei das C=C-Äquivalentgewicht des gesamten aus der Summe von A) und B) gebildeten Harzfestkörpers zwischen 300 und 10000 liegt.

6. Klarlacküberzugsmittel nach Anspruch 2 oder 5, **dadurch gekennzeichnet, dass** das C=C-Äquivalentgewicht des gesamten aus der Summe von A) und B) gebildeten Harzfestkörpers zwischen 400 und 1500 liegt.

7. Verwendung der Klarlacküberzugsmittel nach einem oder mehreren Ansprüche 2, 5 und 6 zur Lackierung von Kraftfahrzeugen.

8. Verfahren nach einem der Ansprüche 1, 3 oder 4, **dadurch gekennzeichnet, dass** als Vernetzer auf Triazinbasis ein Aminoplastharz verwendet wird.

9. Verfahren nach einem der Ansprüche 1, 3, 4 oder 8, **dadurch gekennzeichnet, dass** im System A) ein Melaminharz als Vernetzer verwendet wird.

10. Verfahren nach einem der Ansprüche 1, 3, 4 oder 8, **dadurch gekennzeichnet, dass** Im System A) ein Umesterungsvernetzer verwendet wird.

11. Klarlacküberzugsmittel nach einem der Ansprüche 2, 5 oder 6, **dadurch gekennzeichnet, dass** es sich bei dem Vernetzer auf Triazinbasis um ein Aminoplastharz handelt.

12. Klarlacküberzugsmittel nach einem der Ansprüche 2, 5, 6 oder 11, **dadurch gekennzeichnet, dass** es sich bei dem Vernetzer auf Triazinbasis um ein Melaminharz handelt.

13. Klarlacküberzugsmittel nach einem der Ansprüche 2, 5, 6 oder 11, **dadurch gekennzeichnet, dass** es sich bei dem Vernetzer auf Triazinbasis um einen Umesterungsvernetzer handelt.

## Claims

1. Process for the lacquer coating of substrates with a colour- and/or effect-imparting basecoat lacquer layer and a clear topcoat lacquer layer, in which a colour- and/or effect-imparting basecoat lacquer layer comprising a basecoat coating composition is applied to a substrate and said basecoat lacquer layer is provided with a clear lacquer coating by the wet-on-wet process, the uncured clear lacquer layer being exposed to high-energy radiation prior to common stoving or common curing with the basecoat lacquer layer, **characterised in that** the clear lacquer coating composition used has a resin solids content including 50 to 98 % by weight of a system (A), which may be thermally cured by condensation reactions and comprises hydroxy-functional (meth)acrylic copolymers, polyester resins and/or polyurethane resins individually or as a mixture as a binder, a triazine-based crosslinking agent and optionally with a reactive thinner and contains substantially no free-radically polymerisable double bonds and substantially no groups capable of reacting in another way with free-radically polymerisable double bonds of the system (B), and 2 to 50 % by weight of a system (B), which may be cured by high-energy radiation mediated free-radical polymerisation of olefinic double bonds and comprises a polymer or an oligomer, optionally in combination with a reactive thinner, the percentages by weight adding up to 100 % by weight and the C=C-equivalent weight of the total resin solids formed from the sum of systems (A) and (B) being between 300 and 10,000.

2. Clear lacquer coating composition, **characterised in that** the resin solids content includes 50 to 98 % by weight of a system (A), which may be thermally cured by condensation reactions and comprises hydroxy-functional (meth)acrylic copolymers, polyester resins and/or polyurethane resins individually or as a mixture as a binder, a triazine-based crosslinking agent and optionally with a reactive thinner, containing substantially no free-radically polymerisable double bonds and substantially no groups capable of reacting in another way with free-radically polymerisable double bonds of the system (B), and 2 to 50 % by weight of a system (B), which may be cured by high-energy radiation mediated free-radical polymerisation of olefinic double bonds and comprises a polymer or oligomer, optionally in combination with a reactive thinner, the percentages by weight adding up to 100 % by weight and the C=C-equivalent weight of the total resin solids formed from the sum of systems (A) and (B) being between 300 and 10,000.

3. Process according to claim 1, **characterised in that** the clear lacquer coating composition comprises a resin solids content including 70 to 95 % by weight of a system (A), which may be thermally cured by condensation reactions and contains substantially no free-radically polymerisable double bonds and substantially no groups capable of reacting in another way with free-radically polymerisable double bonds of the system (B), and 5 to 30 % by weight of a system (B), which may be cured by high-energy radiation mediated free-radical polymerisation of olefinic double bonds, the percentages by weight adding up to 100 % by weight and the C=C-equivalent weight of the total resin solids formed from the sum of systems (A) and (B) being between 300 and 10,000.

4. Process according to either claim 1 or claim 3, **characterised in that** the C=C-equivalent weight of the total resin solids formed from the sum of systems (A) and (B) is between 400 and 1,500.

5. Clear lacquer coating composition according to claim 2, **characterised in that** it comprises a resin solids content including 70 to 95 % by weight of a system (A), which may be thermally cured by condensation reactions and contains substantially no free-radically polymerisable double bonds and substantially no groups capable of reacting in another way with free-radically polymerisable double bonds of the system (B), and 5 to 30 % by weight of a system (B), which may be cured by high-energy radiation mediated free-radical polymerisation of olefinic double bonds, the percentages by weight adding up to 100 % by weight and the C=C-equivalent weight of the total resin solids formed from the sum of systems (A) and (B) being between 300 and 10,000.

6. Clear lacquer coating composition according to either claim 2 or claim 5, **characterised in that** the C=C-equivalent weight of the total resin solids formed from the sum of systems (A) and (B) is between 400 and 1,500.

7. Use of the clear lacquer coating composition according to one or more of claims 2, 5 and 6 for the lacquer coating of motor vehicles.

8. Process according to one of claims 1, 3 or 4, **characterised in that** as triazine-based crosslinking agent an amino resin is used.

9. Process according to one of claims 1, 3, 4 or 8, **characterised in that** in system A) a melamine resin is used as crosslinking agent.

10. Process according to one of claims 1, 3, 4 or 8, **characterised in that** in system A) a transesterification crosslinking agent is used.

11. Clear lacquer coating composition according to one of claims 2, 5 or 6, **characterised in that** the triazine-based crosslinking agent is an amino resin.

12. Clear lacquer coating composition according to one of claims 2, 5, 6 or 11, **characterised in that** the triazine-based crosslinking agent is a melamine resin.

13. Clear lacquer coating composition according to one of claims 2, 5, 6 or 11, **characterised in that** the triazine-based crosslinking agent is a transesterification crosslinking agent.

## Revendications

1. Procédé de laquage de substrats, avec une couche de laque de base donnant la couleur et/ou l'apparence et une couche de vernis transparent, dans lequel une couche de laque de base donnant la couleur et/ou l'apparence, formée d'un agent de revêtement de laque de base, est appliquée sur un substrat, et cette couche est garnie d'un revêtement de vernis transparent par le procédé d'impression humide, dans lequel la couche de vernis transparent non durcie, avant la cuisson commune ou le durcissement commun avec la couche de laque de base, est soumise à un rayonnement à haute énergie, **caractérisé en ce que,** comme agent de revêtement de vernis transparent, on en utilise un dont la matière sèche résineuse se compose à 50 à 98 % en poids d'un système A) des copolymères hydroxyfonctionnels (méth)acryliques, des résines polyesters et/ou des résines polyuréthannes, séparément ou en mélange comme liant, d'un composant réticulant à base de triazine et éventuellement avec un diluant réactif, thermodurcissable par réactions de condensation, qui est pratiquement exempt de doubles liaisons susceptibles de polymérisation radicalaire et pratiquement exempt de groupes susceptibles de réagir par ailleurs avec les doubles liaisons susceptibles de polymérisation radicalaire du système B), et à 2 à 50 % en poids d'un système B) d'un polymère ou d'un oligomère, durcissable par polymérisation radicalaire de doubles liaisons oléfiniques sous l'effet d'un rayonnement à haute énergie, éventuellement en combinaison avec un diluant réactif, dans lequel les pourcentages en poids s'addi-tionnent à 100 % en poids et dans lequel le poids moléculaire équivalent en C=C de l'ensemble de la matière sèche résineuse formée par la somme de A) et B) se trouve entre 300 et 10 000.

2. Agent de revêtement de vernis transparent, **caractérisé en ce que** la matière sèche résineuse se compose à 50 à 98 % en poids d'un système A) des copolymères hydroxyfonctionnels (méth)acryliques, des résines polyesters et/ou des résines polyuréthannes, séparément ou en mélange comme liant, d'un composant réticulant à base de triazine et éventuellement avec un diluant réactif, thermodurcissable par réactions de condensation, qui est pratiquement exempt de doubles liaisons susceptibles de polymérisation radicalaire et pratiquement exempt de groupes susceptibles de réagir par ailleurs avec les doubles liaisons susceptibles de polymérisation radicalaire du système B), et à 2 à 50 % en poids d'un système B) d'un polymère ou d'un oligomère, durcissable par poly-mérisation radicalaire de doubles liaisons oléfiniques sous l'effet d'un rayonnement à haute énergie, éventuellement en combinaison avec un diluant réactif, dans lequel les pourcentages en poids s'additionnent à 100 % en poids et dans lequel le poids moléculaire équivalent en C=C de l'ensemble de la matière sèche résineuse formée par la somme de A) et B) se trouve entre 300 et 10 000.

3. Procédé selon la revendication 1, **caractérisé en ce que** l'agent de revêtement de vernis transparent présente une matière sèche résineuse qui se compose, à 70 à 95 % en poids, d'un système A), thermodurcissable par réactions de condensation, qui est pratiquement exempt de doubles liaisons susceptibles de polymérisation radicalaire et pratiquement exempt de groupes susceptibles de réagir par ailleurs avec les doubles liaisons susceptibles de polymérisation radica-laire du système B), et à 5 à 30 % en poids d'un système B), durcissable par polymérisation radicalaire de doubles liaisons oléfiniques, dans lequel les pourcentages en poids s'additionnent à 100 % en poids et dans lequel le poids moléculaire équivalent en C=C de l'ensemble de la matière sèche résineuse formée par la somme de A) et B) se trouve entre 300 et 10 000.

4. Procédé selon la revendication 1 ou 3, **caractérisé en ce que** le poids moléculaire équivalent en C=C de l'ensem-ble de la matière sèche résineuse formée par la somme de A) et B) se trouve entre 400 et 1 500.

5. Agent de revêtement de vernis transparent selon la revendication 2, **caractérisé en ce qu'**il présente une matière sèche résineuse qui se compose à 70 à 95 % en poids d'un système A), thermodurcissable par réactions de condensation, qui est pratiquement exempt de doubles liaisons susceptibles de polymérisation radicalaire et pratiquement exempt de groupes susceptibles de réagir par ailleurs avec les doubles liaisons susceptibles de polymérisation radicalaire du système B), et à 5 à 30 % en poids d'un système B), durcissable par polymérisation radicalaire de doubles liaisons oléfi-niques sous l'effet d'un rayonnement à haute énergie, dans lequel les pourcentages en poids s'additionnent à 100 % en poids et dans lequel le poids moléculaire équivalent en C=C de l'ensemble de la matière sèche résineuse formée par la somme de A) et B) se trouve entre 300 et 10 000.

6. Agent de revêtement de vernis transparent selon la revendication 2 ou 5, **caractérisé en ce que** le poids moléculaire équivalent en C=C de l'ensemble de la matière sèche résineuse formée par la somme de A) et B) se trouve entre 400 et 1 500.

7. Utilisation de l'agent de revêtement de vernis trans-parent selon l'une quelconque ou plusieurs des revendications 2, 5 et 6 pour le laquage de véhicules à moteur.

8. Procédé selon l'une quelconque des revendications 1, 3 ou 4, **caractérisé en ce que** comme composant réticulant à base de triazine on en utilise une résine d'aminoplaste.

9. Procédé selon l'une quelconque des revendications 1, 3, 4 ou 8, **caractérisé en ce que** dans système A) comme composant réticulant on en utilise une résine mélamine

10. Procédé selon l'une quelconque des revendications 1, 3, 4 ou 8, **caractérisé en ce que** dans système A) on utilise un agent de réticulation à transestérification.

11. Agent de revêtement de vernis transparent selon l'une quelconque des revendications 2, 5 ou 6, **caractérisé en ce que** pour composant réticulant à base de triazine il s'agit d'une résine d'aminoplaste.

12. Agent de revêtement de vernis transparent selon l'une quelconque des revendications 2, 5, 6 ou 11, **caractérisé en ce que** pour composant réticulant à base de triazine il s'agit d'une résine mélamine.

13. Agent de revêtement de vernis transparent selon l'une quelconque des revendications 2, 5, 6 ou 11, **caractérisé en ce que** pour composant réticulant à base de triazine il s'agit d'un agent de réticulation à transestérification.
